# EUROPEAN PATENT APPLICATION

(11) **EP 4 585 376 A1**
(43) Date of publication of application: **16.07.2025**
(21) Application number: 22961056.3
(22) Date of filing: 26.09.2022
(51) Int. Cl.: B25J 11/00, B25J 5/00, B25J 9/16, B25J 13/06, B25J 13/08

(54) **GUIDE ROBOT AND OPERATION METHOD OF GUIDE ROBOT**

(71) Applicant: LG Electronics Inc., Yeongdeungpo-gu Seoul 07336 (KR)
(72) Inventor: PARK, Mihyun, Seoul 06772 (KR); LEE, Soojin, Seoul 06772 (KR)
(74) Representative: Vossius & Partner Patentanwälte Rechtsanwälte mbB
(86) International application number: PCT/KR2022/014317
(87) International publication number: WO 2024/071453

(57) **Abstract**

A guide robot (100) and an operation method of same are disclosed. A guide robot (100) according to the present disclosure may, when there is a request for use of a rear side display (151b) while a front side display (151a) is in use, allow a limited use of the rear side display (151b) and provide a screen corresponding to the request for use. In this case, a range of the limited use may be determined differently according to a use state of the front side display (151a).. Accordingly, a double-sided display is utilized more efficiently, and thus the usability of a guide robot is extended.

## Description

### Technical Field

The present disclosure relates to a guidance robot and a method of operating the guidance robot and, more specifically, to a guidance robot including touchscreens on both surfaces, respectively, of the body, and a method of operating the guidance robot.

### Background Art

In recent years, there has been ever-increasing interest in guidance robots providing various guidance services to users. While autonomously traveling without user operation, for example, the guidance robots provide various guidance services to users by performing a voice conversation function or an interaction function using a touchscreen.

These guidance robots are capable of performing signage advertising functions using the mounted display and enhancing advertising effectiveness by moving within a predetermined space while performing a signage advertising function.

To further enhance the advertising effectiveness, guidance robots with displays on both surfaces have been under development. However, in practice, instead of both the displays on both surfaces, only the display on one surface (e.g., the display on the front surface) displays normally due to the following situations.

Specifically, one reason is the constraints caused by the robot's movements. When a user of one display controls the robot's movement through the display (e.g., for path guidance, taking a photo, or a similar function), another user of the other display may be startled by sudden movement or find his/her usage restricted by the robot's movement. Another reason is that in a case where the displays on the front and rear surfaces are simultaneously used, overlapping or redundant content related to usage guidelines can cause confusion for the user.

The user assumes that when the guidance robot has displays on both surfaces, both displays operate simultaneously. However, in the related art, due to current constraints and situations mentioned above, for example, in a case where the display on the rear surface is touched while the display on the front surface is in use, there is no screen change because the request from the display on the rear surface is ignored. Accordingly, users intending to use the display on the rear surface find themselves unsure of what to do, significantly diminishing the usability of the displays on both surfaces.

Therefore, further development is needed to provide more users with the experience of guidance robots and to expand the usability of the displays on both surfaces.

### Disclosure of Invention

### Technical Problem

One object of some embodiments of the present disclosure is to provide a guidance robot with displays on both surfaces, the display on one surface thereof being used in a situation where the display on the other surface is in use, and a method of operating the guidance robot.

Another object of some embodiments of the present disclosure is to provide a guidance robot with displays on both surfaces, the guidance robot being capable of restricting its movement for safety when a usage request is made for the display on one surface in a situation where the display on the other surface is in use, and a method of operating the guidance robot.

A further object of some embodiments of the present disclosure is to provide a guidance robot with displays on both surfaces, the guidance robot being capable of notifying a user that a usage request is made for the display on one surface while the display on the other surface is in use, and of canceling all usage restrictions on the display on one surface when the user no longer intends to use the display on the other surface, and a method of operating the guidance robot.

Yet another object of some embodiments of the present disclosure is to provide a method of operating a guidance robot capable of deploying the technique of being able to process a plurality of tasks more efficiently even in a situation where the plurality of tasks requested through displays on both surfaces of the guidance robot is unable to be executed simultaneously or independently.

### Solution to Problem

In a case where a usage request is made for a display on the rear surface while a display on the front surface is in use, a guidance robot according to the present disclosure can allow the restricted use of the display on the rear surface and provide a screen corresponding to the usage request. At this point, the restricted usage range can be determined in a manner that varies depending on a usage state of the display on the rear surface.

Specifically, according to an aspect of the present disclosure, there is provided a guidance robot including: a traveling-enabling unit that moves the guidance robot; a display unit that includes a first touchscreen and a second touchscreen provided on the front and rear surfaces, respectively, of the main body of the guidance robot; and a processor that is electrically connected to the display unit and outputs first screen information, corresponding to a first task that involves the use of the first touchscreen, to the first touchscreen. In the guidance robot, the processor recognizes a usage request for the second touchscreen while the first screen information is displayed on the first touchscreen, determines second screen information, corresponding to the usage request for the second touchscreen, based on a state of the first task, and outputs the determined second screen information to the second touchscreen.

In an embodiment, in the guidance robot, while preset screen information is displayed on the second touchscreen, the usage request for the second touchscreen may be recognized based on the detection of a user in front of the second touchscreen through a proximity sensor and on a touch input applied to the second touchscreen.

In an embodiment, in the guidance robot, when the first task is in an executed state, in response to the usage request for the second touchscreen, a read-only menu screen may be determined to be the second screen information.

In an embodiment, in the guidance robot, in response to the determination that a function corresponding to the usage request for the second touchscreen is unable to be performed due to the state of the first task, the processor may output guidance information, indicating that the requested function is unable to be performed, to the second touchscreen.

In an embodiment, in the guidance robot, in a case where a traveling function of the guidance robot is involved in the first task, the processor may output the second screen information, including guidance information associated with performing the traveling function, to the second touchscreen.

In an embodiment, in the guidance robot, while the second screen information is displayed on the second touchscreen, in response to recognizing the lack of intention to use the first touchscreen, the processor may switch the first screen information to preset screen information and output third screen information corresponding to a second task involving the use of the second touchscreen.

In an embodiment, in the guidance robot, while the first screen information corresponding to the first task is displayed, the processor may recognize a request for a second task involving the use of the second touchscreen, determine whether the second task is executed, based on the state of the first task, and change an executed state of the first task based on the second task.

In an embodiment, in the guidance robot, in a case where a traveling function of the guidance robot is involved in the first task, the processor may execute the first task in a state where the traveling function is interrupted, based on the second task.

In an embodiment, in the guidance robot, in a case where the first and second tasks involve functions that are not executable simultaneously, the processor may delay the execution of the first and second tasks until execution priorities of the tasks are determined.

In an embodiment, in the guidance robot, the processor may display notification information, corresponding to the usage request for the second touchscreen, in one region of the first touchscreen, and the notification information may vary depending on a usage state of the second touchscreen.

In an embodiment, in the guidance robot, the processor may determine the execution priorities of the first and second tasks based on the task request times for the first and second tasks, output task processing information, including the execution priorities according to the determination, to the first and second touchscreens, respectively, and control an operation of the guidance robot based on the task processing information.

In an embodiment, in the guidance robot, while the first and second tasks are executed or while the guidance robot performs the operation based on the task processing information, in response to detecting the lack of intention to use one of the first and second touchscreens, the processor may resume executing the task on the other touchscreen.

In an embodiment, in the guidance robot, in a case where a common task portion is included in the first and second tasks, the processor may output task processing information, including the common task portion, to the first and second touchscreens, and while the guidance robot performs an operation for the common task portion, the processor may provide information about the other task portions to each of the touchscreen.

In an embodiment, in the guidance robot, when a preset condition is satisfied, the processor may change the execution priorities of the first and second tasks, temporarily interrupt the execution of the previous task based on the change, and output guidance information associated with the changed execution priorities and the next operation to one of the first and second touchscreens, on which the previous task is interrupted.

In an embodiment, in the guidance robot, the preset condition may be associated with the expected completion time of time, whether the traveling function is involved in the task, or whether the task is urgent.

According to another aspect of the present disclosure, there is provided a method of operating a guidance robot, the method including: a step of displaying different screens on first and second touchscreens provided on the front and rear surfaces, respectively, of the main body of the guidance robot; a step of outputting first screen information, corresponding to a first task involving the use of the first touchscreen, to the first touchscreen; a step of recognizing a usage request for the second touchscreen while the first screen information is displayed on the first touchscreen; and a step of determining second screen information, corresponding to the usage request for the second touchscreen based on a state of the first task, and outputting the determined second screen information to the second touchscreen.

### Advantageous Effects of Invention

In a guidance robot and a method of operating the guidance robot according to some embodiments of the present disclosure, in a case where a usage request is made for a display on the rear surface while a display on the front surface is in use, the restricted use of the display on the rear surface, such as in a reading mode, is allowed without ignoring the usage request. Consequently, usability can be enhanced by more efficiently utilizing the displays on both surfaces.

In addition, in the guidance robot and the method of operating the guidance robot according to some embodiments of the present disclosure, in a case where a traveling function is involved in the use of the display on the front surface, the user of the display on the rear surface is notified of this fact, or the traveling function is temporarily restricted. Consequently, both the users of the displays on both surfaces can safely use the guidance robot.

In addition, in the guidance robot and the method of operating the guidance robot according to some embodiments of the present disclosure, each user of the displays on both surfaces can check whether the opposite display is in use and a usage state of the opposite display. Additionally, the user is enabled to use one display without any restriction when the lack of intention to use the opposite display is verified. Consequently, different users of the displays on both surfaces can further maximize the usability of the displays.

in addition, in the guidance robot and the method of operating the guidance robot according to some embodiments of the present disclosure, even in a situation where a plurality of tasks requested through the displays on both surfaces cannot be executed simultaneously or independently, the plurality of tasks can be processed more efficiently based on references such as the order of task requests, detection of a common task portion, and the estimated task completion time. Consequently, the usage experience and satisfaction of different users can be significantly improved.

### Brief Description of Drawings

FIG. 1 is a view illustrating an example of a guidance robot according to the present disclosure.
FIG. 2 is a block diagram illustrating an exemplary configuration of the guidance robot according to the present disclosure.
FIG. 3 is a view illustrating the guidance robot, which includes a plurality of displays, according to the present disclosure.
FIG. 4 is a view illustrating a state where usage requests are made for all the plurality of displays in the guidance robot according to the present disclosure.
FIG. 5 is a representative flowchart for a method of operating the guidance robot according to the present disclosure.
FIGS. 6A and 6B are views, each illustrating an example where in the guidance robot according to the present disclosure, while a first touchscreen is in use, a usage request is made for a second touchscreen, and in response to the usage request, a screen in a reading mode is provided.
FIG. 7 is a view illustrating an example of a screen in an informational robot according to the present disclosure, where a function request that is not executable on the second touchscreen while the first touchscreen is in use is illustrated.
FIG. 8A is a view illustrating an example of a screen that provides a notification to the second touchscreen when a traveling function is involved in a first task in the guidance robot according to the present disclosure. FIG. 8B is a view illustrating an example of a screen change on the second touchscreen in a case where the lack of intention to use the first touchscreen is verified.
FIG. 9 is an exemplary flowchart for another method of operating the guidance robot according to the present disclosure.
FIGS 10A and 10B are views illustrating different examples, respectively, of screen processing for each touchscreen in a case where functions that are not simultaneously executable are involved in tasks requested from the first and second touchscreens in the guidance robot according to the present disclosure.
FIGS 11A, 11B, and 11C are views illustrating different examples, respectively, of a screen that notifies the first touchscreen of a usage state of the second touchscreen in the guidance robot according to the present disclosure.
FIGS. 12, 13, and 14 are views illustrating examples, respectively, of processing in a case where the first and second tasks can be simultaneously executed in the guidance robot according to the present disclosure, for example, processing of different usage requests for the second touchscreen in a state where the path guidance is requested as a task on the first touchscreen.

### Mode For the Innovation

Embodiments disclosed in the present specification will be described in detail below with reference to the accompanying drawings, and regardless of reference numerals, the same or similar constituent elements are given the same reference numeral, and descriptions thereof are not repeated. The terms 'module' and 'unit' are hereinafter interchangeably or individually used to refer to a constituent element only for descriptive convenience in the present specification and therefore are not themselves intended to take on different meanings or to depict different functions. In addition, when describing the embodiments disclosed in the present specification, a detailed description of a related well-known technology will be omitted if it is determined that it would obscure the nature and gist of the present disclosure. In addition, the accompanying drawings are provided only to help easily understand the embodiments disclosed in the present specification. It should be understood that the technical idea disclosed in the present specification is not limited by the accompanying drawings. Furthermore, it should be understood that any alteration or equivalent of, or any substitute for, a constituent element according to an embodiment of the present disclosure, which falls within the scope of the technical idea of the present disclosure, is included within the scope of the present disclosure.

The ordinal numbers first, second, and so forth may be used to describe various elements, but they do not limit these elements. These ordinal numbers are only used to distinguish one element from another.

It should be understood that a constituent element, when referred to as 'connected to' or 'have access to' a different constituent element, may be directly connected to or have direct access to the different constituent element or may be connected to or have access to the different constituent element, with a third constituent element in between. Likewise, it should be understood that a constituent element, when referred to as "directly connected to' or 'have direct access to' a different constituent element, may be connected to or have access to the different constituent element, without a third constituent element in between.

A noun in singular form, unless it has a different meaning in context, has the same meaning as when used in its plural form.

The terms "include," "have," and equivalent expressions, which are used in the present application, should be understood as indicating the presence of a feature, number, step, operation, constituent element, component, or combination thereof, without precluding the possibility of the presence or addition of one or more features, numbers, steps, operations, constituent constituents, components, or combinations thereof.

A "guidance robot" disclosed in the present specification refers to a robot capable of providing welcome greetings, path guidance, product guidance, parking guidance, library guidance, and various types of information, such as product search information, airport information, and docent information, to users in public places, including airports, shopping malls, such as department stores, accommodations, such as hotels, and cultural complexes, such as art museums and libraries.

In addition, the "guidance robot" disclosed in the present disclosure is capable of performing autonomous traveling to guide users to paths, specific places, and other destinations.

In addition, objects that move in a designated space while the "guidance robot" disclosed in the present disclosure travels within the designated space, collectively include visitors, users, obstacles, and similar entities.

In addition, the "guidance robot" disclosed in the present disclosure may include various output means associated with touchscreens, sound output units, LEDs, tactile sensors, and similar components to provide information or guidance in various forms (visual, auditory, and tactile).

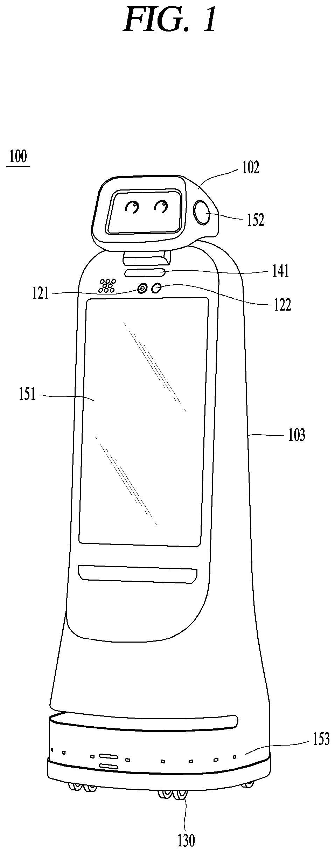

FIG. 1 is a view illustrating an example of a guidance robot 100 according to the present disclosure.

With reference to FIG. 1, the guidance robot 100 according to the present disclosure may be configured to include a head 102, a camera 121, a speaker 152, a voice recognition unit (not illustrated), a display 151, and a traveling-enabling unit 130. However, depending on the application, the guidance robot 100 according to the present disclosure may be configured to omit one or more of the constituent elements disclosed in the present specification or to further include one or more constituent elements.

The exterior appearance of the guidance robot 100 according to the present disclosure may broadly include an upper module, which includes the head 102 and the display 151, and a lower module, which includes the traveling-enabling unit 130. The upper module and the lower module may be provided in such a manner as to be detachably attached to each other.

The upper module provides a user interface that is changeable depending on service environments. The lower module provides traveling functionality for moving the main body of the guidance robot 100.

The upper module may include a body unit, which forms the main structure and includes the display 151, and a head unit 102, which includes the camera 121 or a similar component. However, depending on the application, the upper module may also be configured in such a manner that a camera is included in the body unit and that a touchscreen is arranged on the head unit 102.

The camera 121 may be provided on one side of the casing of the head unit 102 or on one side of the casing of the body unit. In addition, a plurality of cameras 121 may be provided. In this case, one camera 121 may be provided on the front surface of the main body and positioned to face forward. Another camera 121 may be provided on the lateral or rear surface and positioned to face sideways or backward. Accordingly, an angle of view covering 360 degrees can be formed.

In a case where a plurality of cameras 121 is provided, examples of a first camera may include a 3D stereo camera. The 3D stereo camera may perform functions such as obstacle detection, recognition of a user's face, and stereoscopic image capture. Using the first camera, the guidance robot 100 may detect and avoid an obstacle present in its moving direction and recognize a user, thereby performing various control operations. In addition, examples of a second camera may include a Simultaneous Localization And Mapping (SLAM) camera. The SLAM camera tracks the current location of a camera through feature mapping and performs a function of creating a 3D map based on this location. The guidance robot 100 may recognize its current location using the second camera.

In addition, the camera 121 may recognize an object within its field of view and perform a function of capturing a still image and a moving image. In this regard, the camera 121 may include at least one of the following: a camera sensor (e.g., a CCD sensor, a CMOS sensor, or a similar type), a photo sensor (or image sensor), or a laser sensor. The camera 121 and the laser sensor may operate together to detect a touch on a 3D stereoscopic image by a detection target. The photo sensor may be stacked on a display element, and be configured to scan the motion of the detection target that approaches the touchscreen. More specifically, the photo sensor includes photodiodes and transistors (TRs) mounted in rows/columns, and thus scans an object placed on the photo sensor using an electrical signal that varies with the amount of light applied to the photodiodes. That is, the photo sensor may compute the coordinates of the detection target that vary with a change in the amount of light, and acquire the location information of the detection target from these coordinates.

A sound output unit 152 performs a function of notifying the user of information to be provided in the form of voice and may, for example, take the form of a speaker. Specifically, a response or a search result, which corresponds to the user's voice received through a sound reception unit 122 and a voice recognition unit (not illustrated), which are included in the guidance robot 100, is output in the form of voice through the sound output unit 152. The sound output unit 152 may be provided on the outer circumferential surface of the body unit, which includes the head unit 102 or the display 151. In addition, the sound output unit 152 may output voice information associated with a screen (e.g., a menu screen, an advertisement screen, or a similar screen) displayed on the display 151.

Additionally, the guidance robot 100 according to the present disclosure may include a first speaker 152a on the front surface of the body unit and a second speaker on the rear surface of the body unit. Alternatively, the guidance robot 100 may include an array speaker, capable of outputting sound in various directions, on one side of the body unit.

The sound reception unit 122 performs a function of receiving the user's voice or similar input and may, for example, take the form of a microphone. The sound reception unit 122 may process an external sound signal into electrical voice data, and various noise elimination algorithms for eliminating noise that occurs in the process of inputting the external sound signal may be implemented.

The display 151 may be positioned in the lengthwise direction of the body unit that is one direction of the body unit, and display a screen to provide visual information, for example, guidance information. In addition, the display 151 may be configured to include a display module, a touch sensor, and a pressure sensor.

The display 151, for example, may be configured in such a manner as to open and close the inside of the body unit by being coupled to a movable guide means. In addition, the display 151, for example, may also be configured in such a manner as to be fastened to the body unit and fixed using a fixation member.

In addition, although not illustrated in detail, the display 151 may be provided to face the opposite direction of the head 102, or the displays 151 may be provided to face the same direction as and the opposite direction of the head 102, respectively. This configuration enables the guidance robot 100 to move along an established path in advance of the user to guide him/her to a path. Alternatively, before moving along the established path in advance of the user, the head 102 may also first rotate by 180 degrees and thus change its exterior appearance as if the display 151 were positioned to face the opposite direction of the head 102.

In this case, the display 151 performs a function of displaying visual information (e.g., path guidance information and inquiry information) associated with a currently provided service. The user can see the display 151 installed on the rear side of the guidance robot 100 while moving along with the guidance robot 100.

In addition, the displays 151 may be provided on both the front and rear surfaces, respectively, of the main body. In this case, different screens may be displayed on a first display, provided on the front surface of the main body, and a second display, provided on the rear surface of the main body (e.g., a screen for interacting with the user is displayed on the first display, and an advertisement screen or a similar screen is displayed on the second display).

The display 151 may be configured to include a first touchscreen 151a and a second touchscreen 151b. Specifically, when the display 151 is configured with touchscreens, these touchscreens are provided on both the front and rear surfaces, respectively, of the main body. In this case, the first touchscreen 151a may be provided on the front surface of the main body, and the second touchscreen 151b may be provided on the rear surface of the main body.

In addition, a display unit for outputting various facial expressions of the guidance robot may be provided on the front surface of the head unit 102.

The traveling-enabling unit 130 moves and rotates the main body of the guidance robot 100. To this end, the traveling-enabling unit 130 may be configured to include a plurality of wheels and a drive motor. A driving operation by the traveling-enabling unit 130 is controlled by a processor based on a received control command. A notification may be provided through an LED output means 153 before or after the driving operation.

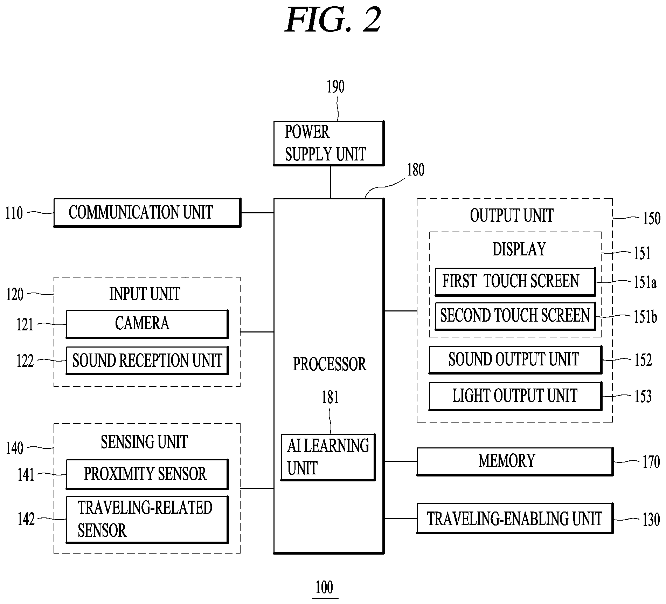

FIG. 2 is a block diagram illustrating an exemplary detailed configuration of the guidance robot according to the present disclosure.

The guidance robot 100 according to the present disclosure may include a communication unit 110, an input unit 120, the traveling-enabling unit 130, a sensing unit 140, an output unit 150, a memory 170, a processor 180, a power supply unit 190, and other similar units. The constituent elements illustrated in FIG. 2 are not essential for realizing the guidance robot. Therefore, the guidance robot described in the present specification may further include one or more constituent elements beyond those illustrated or may omit one or more of them.

The communication unit 110 may include one or more modules that enable wireless communication between the guidance robot 100 and an external server, for example, an artificial intelligence server, or between the guidance robot 100 and an external terminal. In addition, the communication unit 110 may include one or more modules that connect the guidance robot 100 to one or more networks.

The communication unit 110 may communicate with the artificial intelligence server or a similar sever using wireless Internet communication technologies, for example, such as Wireless LAN (WLAN), Wireless Fidelity (Wi-Fi), Wi-Fi Direct, Digital Living Network Alliance (DLNA), Wireless Broadband (WiBro), World Interoperability for Microwave Access (WiMAX), High Speed Downlink Packet Access (HSDPA), High Speed Uplink Packet Access (HSUPA), Long Term Evolution (LTE), LTE-advanced (LTE-A) and others. The communication unit 110 may also communicate with an external terminal and other similar terminals by using short-range communication technologies, such as Bluetooth^{™}, Radio Frequency Identification (RFID), Infrared Data Association (IrDA), Ultra Wideband (UWB), ZigBee, and Near Field Communication (NFC).

The input unit 120 may include the camera 121 or an image input unit for inputting an image signal, the sound reception unit 122 or a microphone for inputting an audio signal, and a user input unit (not illustrated) (e.g., a touch key, a mechanical key, or a similar key) for receiving information as input from the user. Signal data, voice data, and image data, which are collected by the input unit 120, may be analyzed and processed as control commands.

The traveling-enabling unit 130 moves and rotates the main body of the guidance robot 100. To this end, the traveling-enabling unit 130 may be configured to include a plurality of wheels and a drive motor. The driving operation by the traveling-enabling unit 130 is controlled by the processor 180 based on a received control command. A notification may be provided through a light output unit 153, such as LEDs, before or after the driving operation.

The sensing unit 140 may include at least one sensor for sensing at least one of the following: information within the guidance robot, information about surrounding environments near the guidance robot, or user-related information. For example, the sensing unit 140 may include at least one of the following sensors: a proximity sensor 141, an illumination sensor, a touch sensor, an acceleration sensor, a magnetic sensor, a G-sensor, a gyroscope sensor, a motion sensor, an RGB sensor, an infrared (IR) sensor, a finger scan sensor, an ultrasonic sensor, an optical sensor (e.g., refer to the camera 121), a microphone, a battery gauge, an environment sensor (e.g., a barometer, a hygrometer, a thermometer, a radiation detection sensor, a heat detection sensor, a gas detection sensor, or a similar sensor), or a chemical sensor (e.g., an electronic nose, a health care sensor, a biometric sensor, or a similar sensor). The guidance robot disclosed in the present specification may be utilized by combining pieces of information obtained from sensing from at least two of these sensors. In addition, the sensing unit 140 may include a traveling-related sensor 142 that detects an obstacle, a floor condition, and other similar conditions.

Examples of the proximity sensor 141 may include a transmissive photoelectric sensor, a direct reflective photoelectric sensor, a mirror reflective photoelectric sensor, a high-frequency oscillation-type proximity sensor, a capacitance-type proximity sensor, a magnetic proximity sensor, an infrared proximity sensor, and other types of sensors. In addition, the proximity sensor 141 may include at least one of the following: a navigation camera, an ultrasonic sensor, a LiDAR, or a ToF sensor, and may recognize the approach and location of the detection target (e.g., the user) through this device.

In addition, the sensing unit 140 may include at least one sensor for collecting ambient information. As an example, the sensing unit 140 may include one of or two or more of the following: a camera, a 3D depth camera, a LiDAR, a speed sensor, a distance sensor, an obstacle sensor, or the proximity sensor 141. The sensing unit 140 may detect whether there is a user within a traveling space, whether a visitor approaches or moves away, and the direction of the visitor's approach, using one or more sensors.

Information collected by the sensing unit 140 may be provided to the processor 180 or be stored in the memory 170.

The processor 180 may recognize a usage request for the display 151 by detecting the user's approach through the sensing unit 140 and detecting the user's touch on the display 151.

The processor 180 may change preset screen information (e.g., a first advertisement screen) that is output to the first touchscreen 151a to first screen information (e.g., a menu screen) according to a usage request for the first touchscreen 151a. Additionally, the processor 180 may change preset screen information (e.g., a second advertisement screen) that is output to the second touchscreen 151b to second screen information (e.g., a menu screen) according to a usage request for the second touchscreen 151b.

In a case where the usage request is made for the first touchscreen 151a before the usage request is made for the second touchscreen 151b, or vice versa, the processor 180 may determine screen information to be displayed on the touchscreen for which the usage request will be made later depending on the state of a task that is input into the touchscreen for which the usage request is initially made. At this point, the determined screen information may differ from the previous advertisement screen or a usual menu screen.

The output unit 150 serves to generate outputs associated with a sense such as sight, hearing, or touch. The output unit 150 may include at least one of the following: the display 151, the sound output module 152, or the light output module 153. The display 151 may be configured to have an inter-layered structure or an integrated structure incorporating a touch sensor and thus be realized as a touchscreen. The touchscreen may function as a user input unit, which provides an input interface between the guidance robot 100 and the user, and further provide an output interface.

The light output unit 153 outputs a signal for notifying the user of the occurrence of an event in the guidance robot 100, using light emitted by a light source. For example, in a case where a movement command is transferred to the traveling-enabling unit 130 of the guidance robot 100, a signal for notifying the user of the movement of the guidance robot 100 is output through the light output unit 153.

The processor 180 may include an AI learning unit 181 (not illustrated) to perform operations associated with artificial intelligence technologies for the guidance robot. The AI learning unit 181 may be configured to receive, classify, store, and output information that is used for data mining, data analysis, intelligent decision-making, and machine learning algorithms and technologies. The AI learning unit 181 may include one or more memory units. Each memory unit is configured to store information that is received, sensed, detected, generated, or predefined through the guidance robot, or information that is output in other ways through the guidance robot. Alternatively, each memory is configured to store data that is received, sensed, detected, generated, predefined, or output by another constituent element, an apparatus, and a terminal.

In one embodiment, the AI learning unit 181 may be integrated into the guidance robot or include the memory. In one embodiment, the AI learning unit 181 may be realized through the memory 170. However, the AI learning unit 181 is not limited thereto. The AL learning unit 181 may be realized either in an external memory associated with the guidance robot 100 or through a memory included in a server capable of communicating with the guidance robot 100. In another embodiment, the AI learning unit 181 may be realized through a memory maintained under a cloud computing environment or a remote memory accessible by the guidance robot through a communication technique such as over a network.

The AI learning unit 181 is configured to store data in one or more databases for purposes such as identification, indexation, classification, manipulation, storage, search and output. The data are typically used for supervised or unsupervised learning, data mining, prediction analysis, or other machine learning technologies. The information stored in the AI learning unit 181 may be used by the processor 180 or by a plurality of processors included in the guidance robot. The processor 180 or the plurality of processors uses at least one of the following: analysis of different data types, machine learning algorithms, and machine learning technologies. Examples of these algorithms and techniques include k-Nearest neighbor systems, fuzzy logic (e.g., possibility theory), neural networks, Boltzmann machines, vector quantization, pulsed neural nets, support vector machines, maximum margin classifiers, hill-climbing, inductive logic systems, Baysian networks, Petri nets (e.g., finite state machines, Mealy machines, and Moore finite state machines), classifier trees (e.g., perceptron trees, support vector trees, Markov trees, decision tree forests, and random forests), pandemonium models and systems, clustering, artificially intelligent planning, artificially intelligent forecasting, data fusion, sensor fusion, image fusion, reinforcement learning, augmented reality, pattern recognition, automated planning, and other similar approaches.

The processor 180 may determine or predict executable operations of the guidance robot based on information that is determined or generated using data analysis, machine learning algorithms, and machine learning technologies. To this end, the processor 180 may request, search for, receive, or utilize the data stored in the AI learning unit 181. The processor 180 may perform various functions, such as realizing a knowledge-based system, an inference system, and a knowledge acquirement system. Furthermore, the processor 180 may perform various functions, such as realizing a system (e.g., a fuzzy logic system) for inference under uncertainty, an adaptive system, a machine learning system, and an artificial intelligence network.

In addition, the processor 180 may include sub-modules, enabling voice and natural language processing, such as an I/O processing module, an environmental condition module, a voice-text (STT) processing module, a natural language processing module, a task flow processing module, and a service processing module. In the guidance robot, each of the sub-modules may have the authority to access one or more systems, to access data and models, or to access their subsets or supersets. At this point, objects that each of the sub-modules has the authority to access may include scheduling, a vocabulary index, user data, a task flow model, a service model, and an automatic speech recognition (ASR) system.

In some embodiments, the processor 180 may also be configured to sense and detect a user request by analyzing a contextual condition or the user's intention, which is expressed through user's input or natural language input, based on the data stored in the AI learning unit 181. When an operation of the guidance robot is determined based on data analysis conducted by the AI learning unit 181, machine learning algorithms, and machine learning technologies, the processor 180 may control the constituent elements of the guidance robot to perform the determined operation. The processor 180 may perform the determined operation by controlling the guidance robot based on a control command.

The memory 170 stores data that support various functions of the guidance robot 100. The memory 170 may store a multiplicity of application programs (or applications) executed on the guidance robot 100, and data and commands for operating the guidance robot 100. In addition, the memory 170 may store a variable call word used for enabling a function of conducting a voice conversation with the user.

Example of the memory 170 may include at least one of the following types of storage media: flash memory, hard disk, a Solid State Disk (SSD), Silicon Disk Drive (SDD), a multimedia card micro type, a card-type memory (e.g., SD or DX memory), Random Access Memory (RAM), Static Random Access Memory (SRAM), Read-Only Memory (ROM), Electrically Erasable Programmable Read-Only Memory (EEPROM), Programmable Read-Only memory (PROM), magnetic memory, magnetic disk, or optical disk.

The processor 180 typically controls the overall operation of the guidance robot 100 in addition to operations associated with the application program. The processor 180 may process signals, data, information, and other similar elements that are input or output through the constituent elements described above, execute application programs stored in the memory 170, or control the traveling-enabling unit 130. By doing so, the processor 180 may provide information appropriate for the user or perform functions appropriate for the user.

Under the control of the processor 180, the power supply unit 190 is internally or externally supplied with electric power and distributes the electric power to the constituent elements included in the guidance robot 100. The power supply unit 190 may include a battery. The battery may be an internal battery or a replaceable battery.

At least some of the constituent elements may cooperate to operate or control the guidance robot or to implement a method of controlling the guidance robot, as described below in various embodiments. In addition, the operating or controlling of the guidance robot, or the method of controlling the guidance robot may be performed in the guidance robot by executing at least one application program stored in the memory 170.

Various embodiments disclosed below may, for example, be implemented on a recording medium readable by a computer or a similar apparatus, using software, hardware, or any combination thereof.

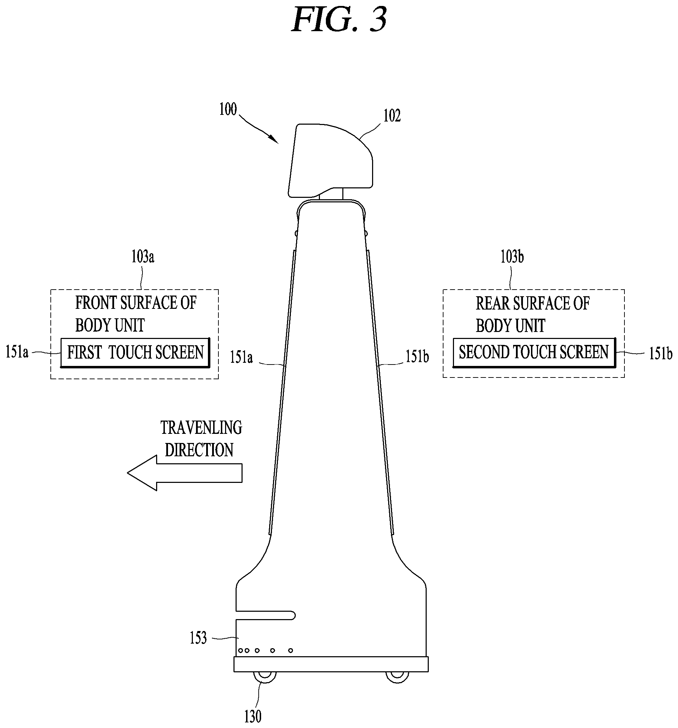

FIG. 3 is a view illustrating the guidance robot, which includes a plurality of displays, according to the present disclosure.

As illustrated in FIG. 3, the guidance robot 100 according to another embodiment of the present disclosure may include the first touchscreen 151a on the front surface 103a of the body unit positioned between the head unit 102 and the traveling-enabling unit 130 and the second touchscreen 151b on the rear surface 103b of the body unit.

The guidance robot 100 may display different types of screen information on the first touchscreen 151a and the second touchscreen 151b, respectively, while traveling. For example, when performing a signage advertisement function, the processor 180 of the guidance robot 100 may display a first advertisement screen on the first touchscreen 151a and a second advertisement screen (different from the first advertisement screen) on the second touchscreen 151b.

When either the first touchscreen 151a or the second touchscreen 151b is used, there are no specific restrictions on the functions that can be performed on each touchscreen. However, in a case where some components (e.g., the camera 121 and the microphone 122) are provided only on the front surface of the main body, when the usage request is made for the second touchscreen 151b, the user may be encouraged to use the first touchscreen 151a for more diverse functions (e.g., taking photos, voice interaction while observing facial expressions, and similar tasks), or the guidance robot 100 may rotate in place after providing guidance. However, in a case where the same component is provided on the rear surface of the main body, the guidance robot 100 may operate in such a manner that the component remains in use through the second touchscreen 151b.

In a case where different advertisement screens are displayed on the first touchscreen 151a and the second touchscreen 151b, respectively, the sound associated with the advertisement screen displayed on the second touchscreen 151b can be output through one speaker 152, or the sound may be selectively output through one of a plurality of speakers.

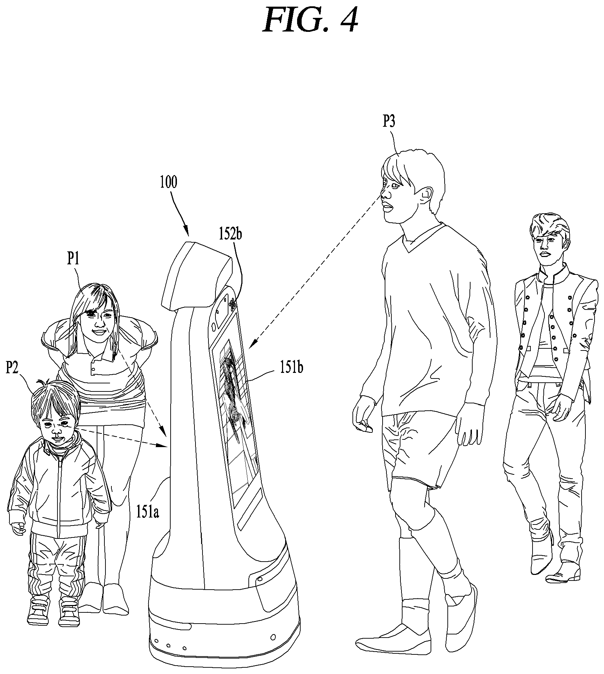

FIG. 4 is a view illustrating a state where the usage requests are made to a plurality of displays, for example, both the first and second touchscreens 151a and 151b, respectively, in the guidance robot 100 according to the present disclosure.

The guidance robot 100 may, for example, recognize the user's usage request for the first touchscreen 151a and/or the second touchscreen 151b based on touch input to the proximity sensor 141 and the display 151.

Specifically, when one of the users P1 and P2 who approach the first touchscreen 151a touches the first touchscreen 151a, the guidance robot 100 may recognize this touch as the usage request for the first touchscreen 151a. Likewise, when a user P3 who approaches the second touchscreen 151b touches the second touchscreen 151b, the guidance robot 100 may recognize this touch as the usage request for the second touchscreen 151b.

According to an embodiment, when either the first touchscreen 151a or the second touchscreen 151b is in use and the usage request for the other touchscreen is recognized, a screen change corresponding to the usage request may vary depending on the task state of the touchscreen in use. Accordingly, one or several of the functions or operations that can be performed may be restricted.

For example, when the usage request is made for the second touchscreen 151b while the first touchscreen 151a is in use, the screen, which is output to the second touchscreen 151b (e.g., a usage guidance screen or a menu screen), may be provided in a reading mode.

According to an embodiment, when either the first touchscreen 151a or the second touchscreen 151b is in use and the usage request for the other touchscreen is recognized, one or several functions (e.g., a function associated with traveling) of the touchscreen in use may be restricted or temporarily interrupted (or put on hold) depending to the usage request from the opposite display.

For example, when the usage request is made for the second touchscreen 151b while the first touchscreen 151a is in use, information indicating that the usage request is made for the second touchscreen 151b and that the movement of the guidance robot 100 is restricted may be output to the first touchscreen 151a.

According to an embodiment of the present disclosure, a method of operating the guidance robot will be described in detail below. For descriptive convenience, the following embodiments are primarily described under the premise that the usage request is made for the second touchscreen 151b while the first touchscreen 151a is in use. However, it should be noted in advance that, except for the case where a function of the touchscreen is restricted due to the mounting position of a component, this description also applies to the case where the usage request is made for the first touchscreen 151a while the second touchscreen 151b is in use.

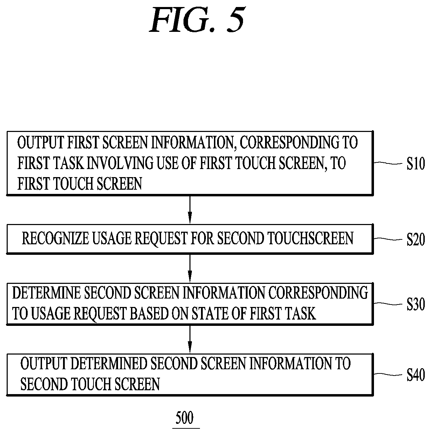

FIG. 5 is a representative flowchart for a method 500 of operating the guidance robot according to the present disclosure. Unless described otherwise, each step in FIG. 5 may be performed through the processor 180 of the guidance robot 100. In addition, the guidance robot 100 may travel within a designated space, display a preset advertisement screen through the display 151, and output the sound associated with the displayed advertisement screen through the sound output unit 152 (e.g., the speaker).

While traveling or stationary, the guidance robot 100 may display different screens on the first touchscreen 151a and the second touchscreen 151b, which are provided on the front and rear surfaces, respectively, of the main body.

At this point, the different screens may represent different types of advertisement content that results from performing the signage advertisement function of the guidance robot 100. At this point, the different types of advertising content may be associated with POIs, respectively, in the directions of the corresponding touchscreens. For example, the advertisement content associated with a POI located in the traveling direction (in the case of the forward traveling) of the guidance robot 100 may be displayed on the first touchscreen 151a. The advertisement content associated with a POI located in the direction opposite to the traveling direction (in the case of the forward traveling) of the guidance robot 100 may be displayed on the second touchscreen 151b.

In a state where the different types of advertisement content are displayed in this manner on the first and second touchscreens 151a and 151b, respectively, the first screen information corresponding to a first task involving the use of the first touchscreen 151a may be output to the first touchscreen 151a (S10).

The use of the first touchscreen 151a, for example, may be recognized when the user detected through the proximity sensor touches the first touchscreen 151a.

The first task may involve a specific function that is activated using a screen displayed on the first touchscreen 151a or an operation of the guidance robot 100 that results from performing the specific function. For example, the first task may refer to a function corresponding to a menu screen request, a photo-taking request, or a path guidance request, or an operation that results from performing the function.

The first screen information may be a response screen of the guidance robot 100 in response to requesting the first task, and a guidance screen (e.g., a guidance screen associated with the use of a function activated in response to requesting the first task) including the response screen. For example, a 'menu screen' in response to the menu screen request, 'preview and photo-taking guidance screens' in response to the photo-taking request, and 'navigation and guidance screens' in response to the path guidance request may be output as the first screen information.

Subsequently, while the first screen information is displayed on the first touchscreen 151a, the guidance robot 100 may recognize the usage request for the second touchscreen 151b (S20).

The use of the second touchscreen 151b may be recognized when the user who is detected, for example, by the proximity sensor touches the second touchscreen 151b. When recognizing the usage request for the second touchscreen 151b, the guidance robot 100 may check a usage state (e.g., whether the first touchscreen 151a is in use or no longer in use, or a similar state) of the first touchscreen 151a.

Next, the guidance robot 100 may determine the second screen information corresponding to the usage request for the second touchscreen 151b based on a state of the first task (e.g., whether the first task is ongoing or terminated, the first task's progress, a function activated to execute the first task, or a similar condition) executed through the first touchscreen 151a (S30).

The usage request for the second touchscreen 151b may include a simple touch on the second touchscreen 151b. In this case, the second advertisement content displayed on the second touchscreen 151b is changed to the second screen information. That is, the guidance robot does not ignore input on the second touchscreen 151b even while the first touchscreen 151a is in use.

The fact that the second screen information is based on the state of the first task executed through the first touchscreen 151a means that the usage range of the second touchscreen 151b is restricted by the first touchscreen 151a. However, the user of the second touchscreen 151b may continue to use the second touchscreen 151b within the restricted usage range as guided.

In addition, the determination of the second screen information based on the state of the first task means that the degree of restriction on the usage range of the second touchscreen 151b may vary depending on the result of checking the current state of the first task. For example, in a case where performing the first task involves the traveling function, the usage time of the second touchscreen 151b may be restricted. Alternatively, if the first task is in an ongoing state, the use of the second touchscreen 151b may be restricted in certain ways, such as restricting the input of one or several control commands or switching to the reading mode.

When the second screen information is determined in this manner, the guidance robot 100 may output the determined second screen information to the second touchscreen 151b (S40).

According to an embodiment, the usage range of the second screen information, which is restricted due to the state of the first task, may be displayed. For example, an indication that restricts the usage time of the second touchscreen 151b, or an indication that shows that the information displayed on the second touchscreen 151b is provided in the reading mode, may be output together.

According to an embodiment, the second screen information displayed on the second touchscreen 151b may be changed to screen information with a changed usage range restriction or to screen information without a usage range restriction when either the state of the first task executed through the first touchscreen 151a changes or it is recognized that the first touchscreen 151a is no longer in use.

Thus, according to the method of operating the guidance robot disclosed in the present specification, even when the usage request is made for the display on the rear surface while the display on the front surface is in use, the usage request is not ignored. Instead, restricted usage, such as executing the reading mode, is permitted, thereby expanding usability by utilizing the displays on both surfaces more efficiently.

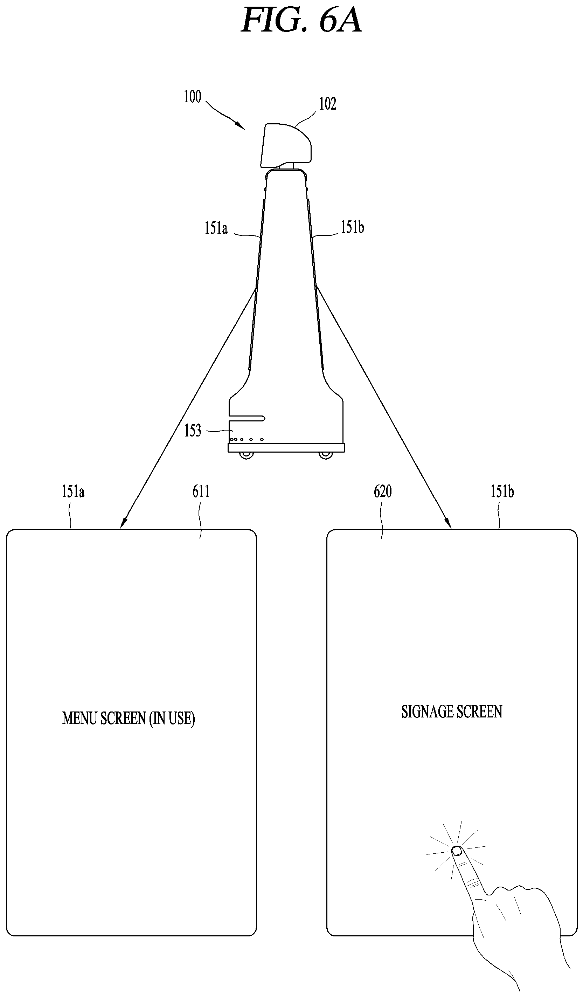

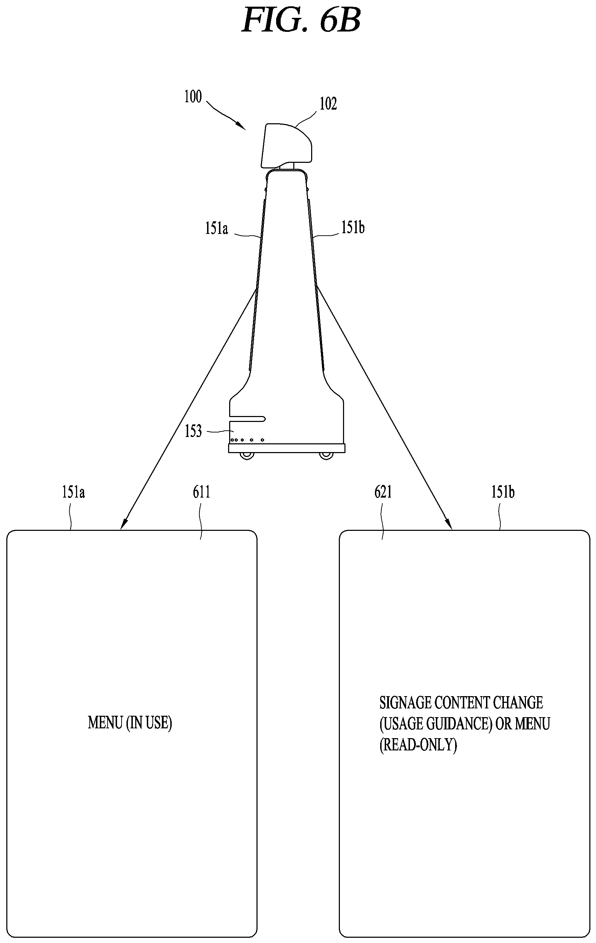

FIGS. 6A and 6B are views, each illustrating an example where, in the guidance robot according to the present disclosure, while the first touchscreen 151a is in use, the usage request is made for the second touchscreen 151b, and in response to the usage request, a screen in the reading mode is provided.

For example, the processor 180 of the guidance robot 100 recognizes the usage request for the second touchscreen 151b based on the detection of the user's approach to the second touchscreen 151b through the proximity sensor 141 and the detection of a touch input applied on the second touchscreen 151b, while preset screen information (e.g., preset advertisement content) is displayed on the second touchscreen.

For example, as illustrated in FIG. 6A, while a menu screen 611 is displayed on the first touchscreen 151a, the touch input on the second touchscreen 151b, on which a preset signage screen 620 is displayed, may be detected, and thus the usage request for the second touchscreen 151b may be detected.

When the usage request for the second touchscreen 151b is detected, the guidance robot may control a screen change on the second touchscreen 151b within a restricted usage range while continuing to use the first touchscreen 151a.

When the usage request for the second touchscreen 151b is made, the guidance robot 100 may check the state of the first task requested through the first touchscreen 151a. When the result of the check indicates that the first task is in progress, in response to the usage request for the second touchscreen 151b, the guidance robot 100 may determine either the usage guidance screen or a read-only menu screen as the second screen information.

With reference to FIG. 6B, the menu screen 611 may continue to be displayed on the first touchscreen 151a without any restriction, and the preset signage screen 620 displayed on the second touchscreen 151b may switch to the usage guidance screen or a reading mode menu screen 621.

The usage guidance screen, for example, may be a guidance screen (e.g., 'For operation, please come and stand in front of me') that suggests the use on the first touchscreen 151a. In this case, the user of the second touchscreen 151b may move towards the first touchscreen 151a and wait to use it. Thereafter, the preset signage screen 620 can be displayed again on the second touchscreen 151b.

The reading mode menu screen may be a menu screen where, for example, functions (e.g., functions involving the traveling function, and functions involving a camera function) unavailable on the second touchscreen 151b are displayed in a deactivated state. In this case, the user of the second touchscreen 151b may use only menu functions other than the functions displayed in the deactivated state.

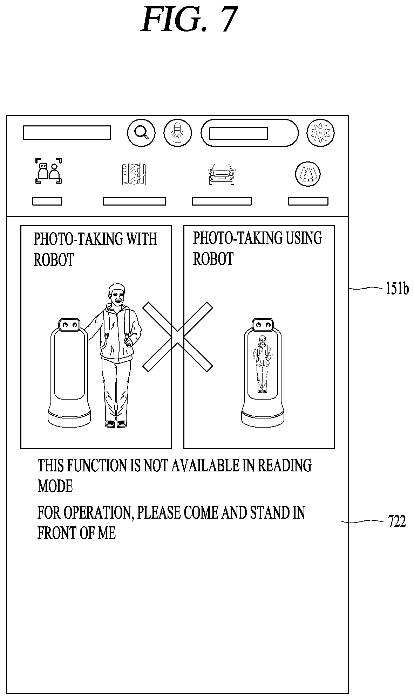

In this regard, FIG. 7 is a view illustrating an example of a screen the second touchscreen 151b that appears when a function that cannot be performed on the second touchscreen 151b is requested while the first touchscreen 151a is in use in the guidance robot according to the present disclosure.

When it is determined that a function corresponding to the usage request for the second touchscreen 151b cannot be performed due to the state of the first task executed through the first touchscreen 151a, the processor 180 of the guidance robot 100 may output, to the second touchscreen 151b, guidance information indicating that the requested function cannot be performed.

For example, in a case where the first touchscreen 151a is in use and where the camera 121 is positioned only on the front surface of the guidance robot, when the user of the second touchscreen 151b makes a request to take a photo, a guidance screen 722 stating 'This function cannot be used in the reading mode. For operation, please come and stand in front of me' may be provided on the second touchscreen 151b, as illustrated in FIG. 7.

In this case, even when the desired photo-taking function cannot be immediately performed, the user of the second touchscreen 151b can at least understand why the photo-taking function cannot be performed.

In the related art, when the first touchscreen 151a is in use, although a touch occurs on the second touchscreen 151b, the screen does not change or preset advertisement content is repeatedly played. As a result, a situation occurs where the user of the second touchscreen 151b may feel confused about what to do. However, now the user can choose whether to wait until the use of the first touchscreen 151a becomes available or to leave without using the second touchscreen 151b.

When the usage request is made for the second touchscreen 151b, if the result of checking the state of the first task requested through the first touchscreen 151a reveals that the first task is completed and that the first touchscreen 151a is no longer in use, a screen corresponding to the usage request for the second touchscreen 151b may be displayed.

At this point, if there are any functions restricted on the second touchscreen 151b due to the installation positions of some components, the guidance robot 100 may provide guidance that prompts the user of the second touchscreen 151b to move over to and use the first touchscreen 151a. Alternatively, the guidance robot 100 may rotate and reposition itself after providing the guidance so that the user stands in front of the first touchscreen 151a.

Examples where both the first and second touchscreens 151a and 152b are used and a screen of the second touchscreen 151b changes due to a change in the state of the first task executed through the first touchscreen 151a are described in detail below.

At this point, the change in the state of the first task may include: a case where a plurality of functions is involved in the first task and after performing one function (e.g., providing a navigation screen), another function (e.g., path guidance traveling) is subsequently performed; a case where a newly activated function (e.g., verification through camera shooting, or a similar function) is performed to execute the first task; and a case where the first task is completed, it is verified that the user who requests the first task no longer intends to use the first task, or a similar operation.

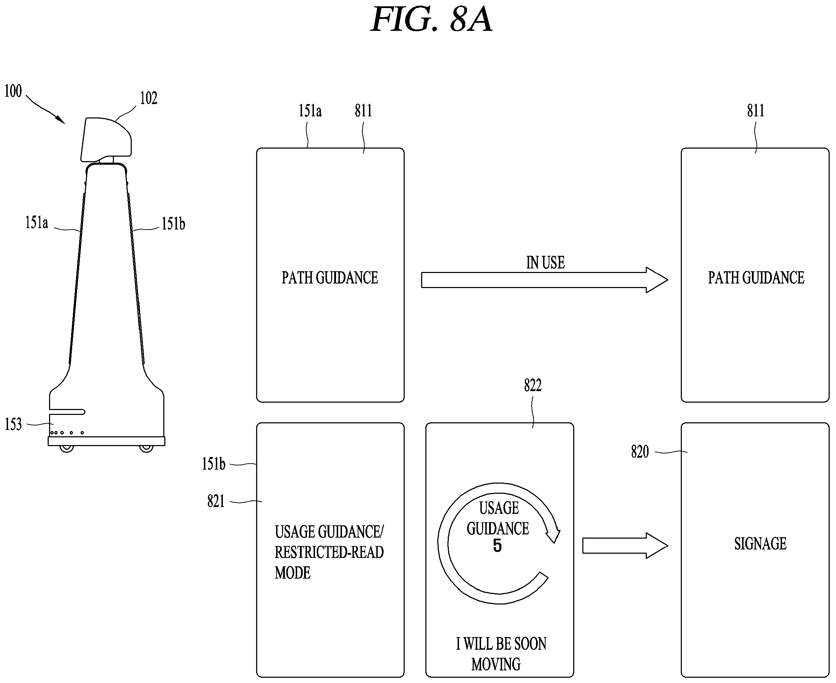

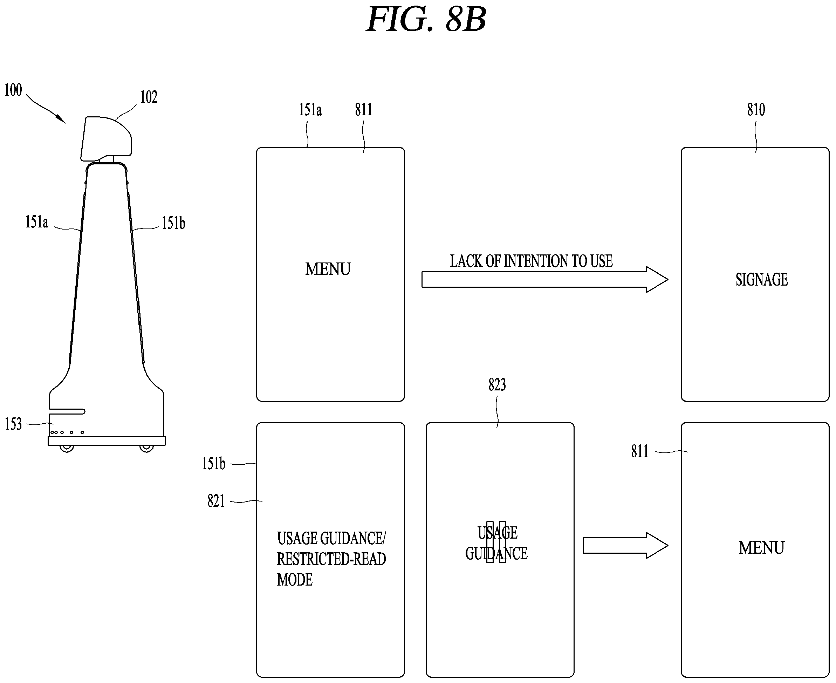

In this regard, FIG. 8A is a view illustrating an example of a screen that provides a notification to the second touchscreen when a traveling function is involved in the first task in the guidance robot according to the present disclosure, and FIG. 8B is a view illustrating an example of a screen change on the second touchscreen in the case where the lack of intention to use the first touchscreen is verified.

In a case where performing the traveling function of the guidance robot 100 is involved in the first task, when the state of the first task changes in such a manner that the traveling function is performed, the guidance robot 100 may control the display 151 in such a manner that guidance information associated with performing the traveling function is displayed on the second screen information displayed on the second touchscreen.

This is because the first touchscreen 151a was in use before the usage request for the second touchscreen 151b, which results in control priority being given to the first touchscreen 151a.

Therefore, in a case where performing the traveling function is involved in the first task request by the user of the first touchscreen 151a, the usage time of the second touchscreen 151b may be restricted. When the user is notified of the remaining available time of the second touchscreen 151b in this manner, even when the guidance robot 100 moves suddenly, safety issues for the user of the second touchscreen 151b (e.g., tripping or a similar accident) or a situation causing embarrassment does not occur.

With reference to FIG. 8A, a path guidance request 811 is received through the first touchscreen 151a of the guidance robot 100 and subsequently, a usage guidance screen or a reading mode menu screen 821 is displayed on the second touchscreen 151b. In this state, before the guidance robot 100 moves in response to the path guidance request 811, remaining available time information, for example, an image screen 822 stating 'The robot will move after five seconds,' may be output to the second touchscreen 151b.

At this point, the remaining available time displayed on the second touchscreen 151b and the movement initiation of the guidance robot 100 in response to the path guidance request 811 on the first touchscreen 151a may be displayed in a synchronized manner.

When the guidance robot 100 begins to move after the remaining available time of the second touchscreen has elapsed, the guidance robot 100 may recognize that the second touchscreen 151b is not in use and travel with preset screen information (e.g., second advertisement content 820) displayed on the second touchscreen 151b.

While the guidance robot 100 travels, the user of the first touchscreen 151a does not use the first touchscreen 151a. At this point, the guidance robot 100 does not recognize this lack of use as the lack of intention to use the first touchscreen 151a. Consequently, the guidance robot 100 operates in such a manner that the first touchscreen 151a is recognized as continuously in use until the path guidance request 811 is completed.

When the lack of intention to use the first touchscreen 151a is verified, there is no need to perform the first task, so there is no need to restrict the usage range of the second touchscreen 151b.

Accordingly, the processor 180 of the guidance robot 100 may perform a switch from the first screen information on the first touchscreen 151a to preset screen information in response to recognizing the lack of intention to use the first touchscreen 151a while the second screen information is displayed on the second touchscreen 151b, and may now output third screen information corresponding to a second task involving the use of the second touchscreen 151b.

At this point, the third screen information may refer to a screen (e.g., a typical menu screen) that is not restricted in its usage range depending on the state of the first task.

At this point, the lack of intention to use the first touchscreen 151a may mean that there has been no touch input on the first touchscreen 151a for a predetermined period or longer while the guidance robot 100 is stationary, and, for example, that no user is detected through the proximity sensor 141 or the camera 121.

With reference to FIG. 8, a menu screen 811 is displayed on the first touchscreen 151a, and subsequently, depending on the usage request for the second touchscreen 151b, the usage guidance screen or the reading mode menu screen 821 is displayed on the second touchscreen 151b. In this state, when the lack of intention to use the first touchscreen 151a is verified, the display of the usage guidance screen or reading mode menu screen 821 is interrupted.

Subsequently, preset screen information (e.g., first advertisement content 810) is displayed on the first touchscreen 151a, and a menu screen 811 with unrestricted usage range, that is, the same menu screen displayed on the first touchscreen 151a, may be output to the second touchscreen 151b.

In another embodiment, when the lack of intention to use the first touchscreen 151a is verified, guidance information may be output in such a manner as to enable the user of the second touchscreen 151b to operate the robot through the first touchscreen 151a, or the main body may rotate 180 degrees after providing guidance, thereby enabling the user to use the first touchscreen 151a that is the main touchscreen.

As described above, in a case where the traveling function is involved in the use of the display on the front surface, the guidance robot according to the present disclosure may notify the user of the display on the rear surface of this dependency or may temporarily restrict the traveling function. Consequently, both the users of the displays on the front and rear surfaces may safely use the guidance robot.

The embodiments in which only the usage range of the second touchscreen 151b is restricted when the usage request is made for the second touchscreen 151b while the first touchscreen 151a is in use. Embodiments in which the use of the first touchscreen 151a is partially restricted in response to the usage request for the second touchscreen 151b are described in detail below.

In addition, for descriptive convenience, the following embodiments are primarily described under the premise that the usage request is made for the second touchscreen 151b while the first touchscreen 151a is in use. However, except for the case where a function of the touchscreen is restricted due to the mounting position of a component, this description may also apply to the case where the usage request is made for the first touchscreen 151a while the second touchscreen 151b is in use.

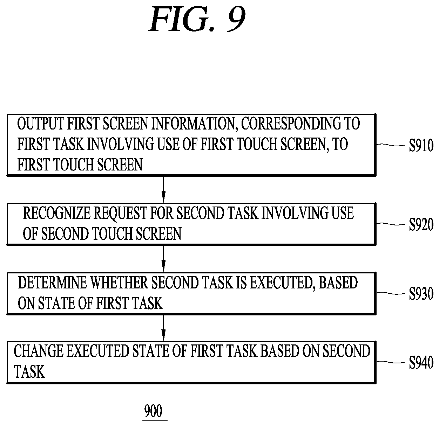

FIG. 9 is a flowchart for another method 900 of operating the guidance robot according to the present disclosure. Unless described otherwise, each step in FIG. 9 may be performed through the processor 180 of the guidance robot 100.

Initially, in a state where different types of advertisement content are displayed on the first and second touchscreens 151a and 151b, respectively, the first screen information corresponding to the first task involving the use of the first touchscreen 151a may be output to the first touchscreen 151a (S910).

The first task may involve a specific function that is activated using a screen displayed on the first touchscreen 151a, or an operation of the guidance robot 100 that results from performing the specific function. For example, the first task may refer to a function corresponding to a menu screen request, a photo-taking request, or a path guidance request, or an operation that results from performing the function.

The first screen information may be a response screen of the guidance robot 100 in response to requesting the first task, and a guide screen (e.g., a guidance screen associated with the use of a function activated in response to requesting the first task) including the response screen. For example, a 'menu screen' in response to the menu screen request, 'preview and photo-taking guidance screens' in response to the photo-taking request, and 'navigation and guidance screens' in response to the path guidance request may be output as the first screen information.

In this state, the processor 180 of the guidance robot 100 may recognize a request for the second task involving the use of the second touchscreen 151b (S920).

The second task may involve the same function as the first task and/or involve the use of an entirely different function. For example, in a case where the first task is in response to the path guidance request, and the second task is in response to the photo-taking request (e.g., taking photos with the robot), it can be said that both the first and second tasks involve 'performing the traveling function,' but only the second task involves a 'camera activation function.'

Next, the guidance robot 100 may determine whether to execute the second task requested from the second touchscreen 151b based on the first task on the first touchscreen 151a (S930).

Determining whether to execute the second task based on the first task means that the use of the second touchscreen 151b is influenced by the use of the first touchscreen 151a.

Specifically, if a function involved in the first task is associated with a task (e.g., path guidance involving the traveling function) that has the characteristic of not being able to be executed simultaneously with the second task, the second task is not executed and remains in a standby state. Conversely, if a function involved in the first task is associated with a task (e.g., guiding to a specific POI on a map screen or a similar task) that has the characteristics of being able to be executed simultaneously with the second task, and if a function involved in the second task is associated with a task (e.g., a guidance screen, guiding to a specific POI on a map screen, or a similar task) that has the characteristics of being able to be executed independently of the first task, the second task may be determined to be executed.

In a case where the second task is determined not to be executed, this determination does not mean that the second touchscreen 151b switches to preset screen information (e.g., second advertisement content).

In other words, while the second task remains in a standby state, the user of the second touchscreen 151b may be guided to the next operation, or at least one portion of the second task may be executed by recognizing a situational change (e.g., a change in task execution priority, interruption/termination of the first task, the recognition of a task portion common to the first task, or a similar condition).

The guidance robot 100 may change an executed state of the first task on the first touchscreen 151a based on the second task requested from the second touchscreen 151b (S940).

The executed state of the first task being based on the second task means that the use on the first touchscreen 151a is influenced by the use of the second touchscreen 151b.

Specifically, if the second task and the first task have characteristics that prevent them from being executed simultaneously and independently of each other (e.g., path guidance involving the traveling function or a similar function), the first task may remain in a standby state without being executed or the execution of the first task may be temporarily interrupted.

Subsequently, with respect to the executed state of the first task, when a task processing technique (e.g., task execution priority setting, interruption/termination of the second task, or the recognition of a task portion common to the second task) in compliance with a pre-established reference of the guidance robot 100 is established, according to the established task processing technique, the first task may exit the standby state and transition to execution.

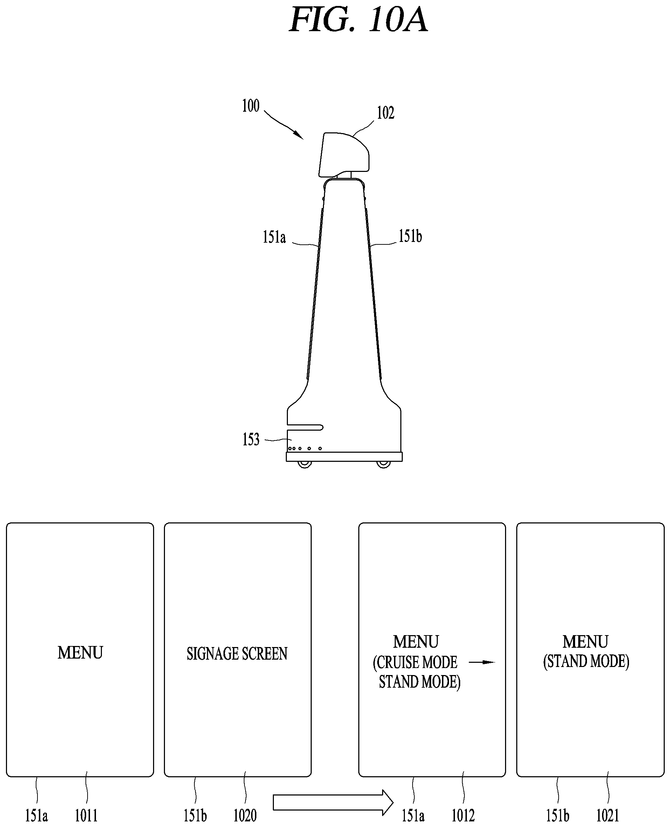

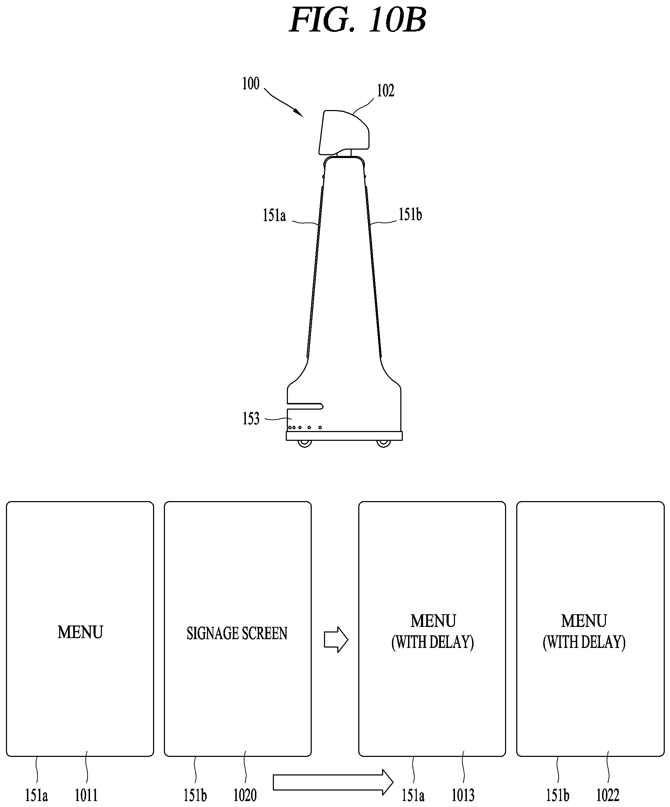

FIGS 10A and 10B are views illustrating different examples, respectively, of screen processing for each touchscreen in a case where functions that is not executable simultaneously are involved in tasks requested from the first and second touchscreens 151a and 151b in association with the above-described method of operating the guidance robot in FIG. 9.

Initially, FIG. 10A is a view illustrating an example where a usage mode of the first touchscreen 151a changes from a cruise mode to a stand mode in response to a task request from the second touchscreen 151b.

The cruise mode refers to an operational mode in which the guidance robot 100 displays a screen on the display 151 while traveling along a designated path. The stand mode refers to an operation mode in which the guidance robot 100 displays a screen on the display 151 while standing at a designated position.

In a case where the traveling function of the guidance robot is involved in the first task, the processor 180 of the guidance robot 100 executes the first task based on the second task in a state where the traveling function is interrupted.

In FIG. 10A, while the user of the first touchscreen 151a has control over and uses the first touchscreen 151a, when a touch input is applied to the second touchscreen 151b, a signage screen 1020 displayed on the second touchscreen 151b switches to a menu screen 1021.

At this point, a menu screen 1011 displayed on the first touchscreen 151a is now displayed as a menu screen 1012 that switches from the cruiser mode to the stand mode. The menu screen 1011 in the cruise mode and the menu screen 1012 in the stand mode show no visual change, but the guidance robot 100 either stops traveling or controls the display 151 without moving from the current location.

The menu screen 1021 displayed on the second touchscreen 151b is also displayed in the stand mode. Therefore, while the users continues using the first and second touchscreens 151a and 151b, respectively, they may use the guidance robot in the stand mode.

Next, FIG. 10B is a view illustrating an example where a task (the first task) on the first touchscreen 151a and a task (the second task) on the second touchscreen 151b both switch to a delayed/standby state in response to the task request from the second touchscreen 151b.

In a case where both the first task and the second task involves functions that influence each other during execution, or are not executable simultaneously, the guidance robot 100 may switch the processing of those tasks to the delayed/standby state (hereinafter referred to as 'delay mode').

In an embodiment, the delay mode may continue until the guidance robot 100 determines execution priorities of tasks (the first and second tasks).

In FIG. 10B, when a touch input is applied to the second touchscreen 151b while the user of the first touchscreen 151a has control over and uses the first touchscreen 151a, the signage screen 1020 displayed on the second touchscreen 151b switches to the menu screen 1022 and is processed as a task that is executed in the delay mode.

At this point, the menu screen 1011 displayed on the first touchscreen 151a is now displayed as a menu screen 1013 operating in the delay mode. A function performed through the menu screen 1013 on the first touchscreen 151a or the menu screen 1022 on the second touchscreen 151b is delayed in processing until the guidance robot 100 determines the execution priority according to a preset reference.

In the delay mode, when it is confirmed that the user of one of the first and second touchscreen 151a and 151b moves away and the touchscreen is no longer used, the delay mode is canceled, and the function for the delay-processed task is activated. Thus, the task requested by the user of the other touchscreen may be immediately executed.

According to the embodiment of the present disclosure, as described above, both the users of the displays on both surfaces are enabled to safely and fairly use the guidance robot, thereby enhancing both the user experience and satisfaction of using the guidance robot, which includes the displays on both surfaces.

As described above, in a case where the use of each of the first and second touchscreens is partially restricted so that both the users of the displays on both surfaces can safely and fairly use the guidance robot, the users may wonder why the guidance robot does not move or why there is a delay in processing the requested task.

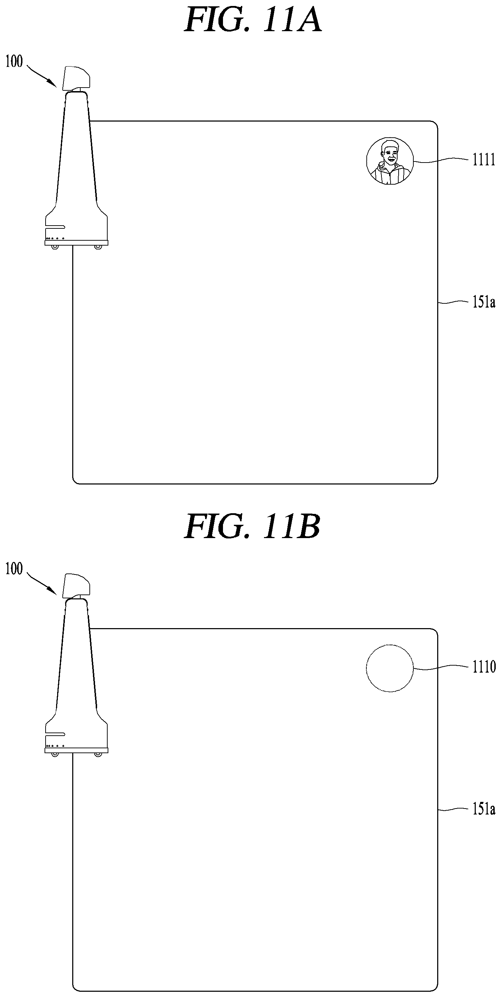

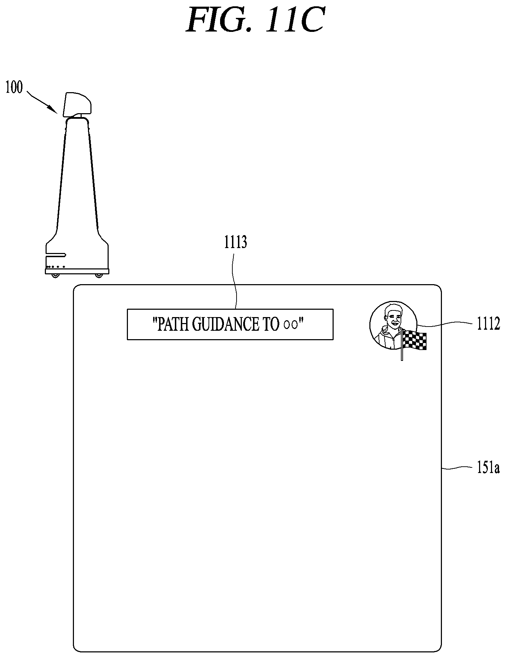

In this regard, FIGS 11A, 11B, and 11C are views illustrating different examples, respectively, of a screen that notifies the first touchscreen of a usage state of the second touchscreen in the guidance robot according to the present disclosure. The examples where the usage state of the second touchscreen is provided to the first touchscreen are described with reference to FIGS. 11A, 11B, and 11C, but conversely, a usage state of the first touchscreen may be provided to the second touchscreen.

When the usage request is made for the second touchscreen 151b while the first touchscreen 151a is in use, the processor 180 of the guidance robot 100 may control the display 151 in such a manner that notification information corresponding to the usage request for the second touchscreen 151b is displayed in one region of the first touchscreen 151a. Accordingly, the user of the first touchscreen 151a may perceive a change in the existing control (or the usage range).

The notification information may be text, an icon, or a graphic image indicating that the second touchscreen 151b is in use by the user.

For example, with reference to FIG. 11A, when the usage request for the second touchscreen 151b is recognized, a person image icon 1111 indicating that the second touchscreen 151b is in use by another user may be displayed in a region of the first touchscreen 151a, for example, at the upper right corner.

Although not illustrated, the notification information may be displayed along with the time when the usage request for the second touchscreen 151b is received (e.g., the time when the second touchscreen 151b is touched), the type of task requested through the second touchscreen 151b, and the detailed information about the task.

The notification information displayed on the first touchscreen 151a can vary depending on the usage state of the second touchscreen 151b. The usage state of the second touchscreen 151b may include user absence/termination of use, a new task request, a request for task change, and other conditions.

From FIG. 11B, it can be seen that, when the non-use of (the absence of the user of) the second touchscreen 151b is detected, the person image icon 1111 displayed on the first touchscreen 151a disappears, and an empty icon 1110 is displayed. Accordingly, the user of the first touchscreen 151a may recognize that he/she can use the first touchscreen 151a without any restriction in use.

The absence of the non-use of (the absence of the user of) the second touchscreen 151b may correspond to a case where there is no request for a task on the second touchscreen 151b, no touch input to the second touchscreen 151b for a predetermined period (e.g., 5 seconds or more), and the proximity sensor 141 no longer detects a user in front of the second touchscreen 151b.

According to the embodiment, when the person image icon 1111 is displayed or disappears, a corresponding sound (e.g., a login/logout sound) may be output through the sound output unit 152.

With reference to FIG. 11C, a function display icon 1112 indicating the usage state of the second touchscreen 151b and detailed information 1113 about a requested task may be displayed in such a manner that the user of the first touchscreen 151a can identify a function activated by the use of the second touchscreen 151b. According to an embodiment, the detailed information 1113 may be displayed only in a case where a touch input is applied to the function display icon 1112.

A representative image corresponding to a function involved in the second task through the second touchscreen 151b may be displayed on the function display icon 1112. For example, in a case where the second task involves the photo-taking function, a camera may be displayed as the representative image on the function display icon 1112, and in a case where the second task involves a path guidance function, a position pin or flag may be displayed as a representative image on the function display icon 1112.

Although not illustrated, according to an embodiment, before detecting the non-use of the second touchscreen 151b, the guidance robot 100 may quickly regain control (the usage right) over the first touchscreen 151a through a touch input to an icon displayed in one area of the first touchscreen 151a (e.g., by touching the icon for exit processing).

However, in this case, notification information (e.g., 'Would you like to stop using this screen?') may be provided at least on the second touchscreen 151b to confirm that it is not in use, and if there is no response within a predetermined time, this non-response may be processed as the non-use of the second touchscreen 151b. This processing may reduce the time for the guidance robot 100 to recognize the non-use of the second touchscreen 151b and enable the user of the first touchscreen 151a to regain control (the usage right) more quickly.

In addition, according to an embodiment, the user of the second touchscreen 151b may also request to hide the detailed information about the task requested by the user of the second touchscreen 151b so that the user of the first touchscreen 151a cannot know the detailed information about the task requested by the user of the second touchscreen 151b, by applying a touch input to the second touchscreen 151b.

According to the present disclosure, each user of the displays on both surfaces can check whether the opposite display is in use and the usage state of the opposite display. Furthermore, the user is enabled to use one display without any restriction when the lack of intention to use the opposite display is verified. Consequently, different users of the displays on both surfaces can further maximize the usability of the displays.

Specific examples where the guidance robot 100 sets the task execution priority in a state where switching to the delay mode takes place because the above-described first and second tasks cannot be simultaneously performed are described below.

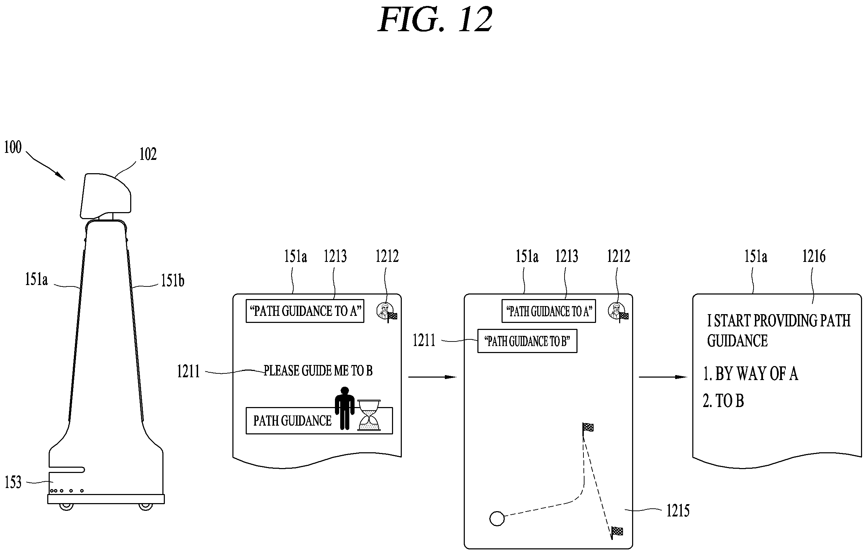

FIGS. 12, 13, and 14 are views illustrating examples, respectively, of processing in a case where the first and second tasks are not executable simultaneously in the guidance robot according to the present disclosure, for example, processing of different usage requests for the second touchscreen in a state where the path guidance is requested as a task on the first touchscreen.

In FIGS. 12, 13, and 14, for descriptive convenience, the path guidance request is used as an example of the initially requested task, that is, the first task. However, the first task is not restricted to the path guidance request. This may also apply to another task involving the traveling function or to a different task that cannot be simultaneously executed.

In an embodiment, in a case where tasks (the first and second tasks) that cannot be performed simultaneously through the first and second touchscreens 151a and 151b, respectively, are requested, the processor 180 of the guidance robot 100 may determine the execution priorities of the first and second tasks based on the task request times for the first and second tasks.

Specifically, the guidance robot 100 may set a higher execution priority for the initially requested task using a queue technique. Subsequently, the guidance robot 100 may output task processing information, which includes the execution priorities according to the determination, to the first and second touchscreens 151a and 151b, and may control the operation of the guidance robot based on the task processing information.

According to an embodiment, in a case where, while the first touchscreen 151a is in use, the usage request for the second touchscreen 151b is later detected, but a task request on the second touchscreen 151b was made earlier, the guidance robot 100 may set a higher execution priority for the task on the second touchscreen 151b that has an earlier request time.

For example, with reference to FIG. 12, a first graphic object 1212 indicating both the usage request for the second touchscreen 151b on the rear surface and a requested task (e.g., path guidance), and a second graphic object 1213 ('path guidance to A') indicating detailed information about the task may be displayed in one region (e.g., the upper right end) of the first touchscreen 151a.

While the first and second graphic objects 1212 and 1213 are displayed, screen information 1211 indicating the requested task (e.g., path guidance) through the second touchscreen 151b may be displayed. The guidance robot 100 switches the tasks requested from the first and second touchscreens 151a and 151b to the delay mode, sets the execution priorities of the requested tasks in such a manner as to correspond to the order of task requests, and provides a task processing technique.

Accordingly, the second graphic object 1213 and a third graphic object 1211, each indicating detailed information about the requested task, are displayed on the first touchscreen 151a in the order of task requests (that is, the task to be executed later is positioned below). As the task processing technique, a plurality of location information 1215 requested from the first and second touchscreens 151a and 151b is displayed, including the current locations and paths. At this point, a path for the path guidance may be established in such a manner that a location corresponding to the initially requested task is visited initially and that a location corresponding to the later-requested task is established as a destination.

When the guidance robot starts to travel for the path guidance, the order of task (path guidance) execution, along with notification information indicating travel start, is displayed as screen information 1216 on the first touchscreen 151a.

According to an embodiment, while the execution of the first and second tasks is delayed, or while an operation is performed based on the task processing information, when the lack of intention to use one of the first and second touchscreens 151a and 151b is detected, the processor 180 of the guidance robot 100 may resume executing the task on the other touchscreen.

For example, in FIG. 12, in a case where a request for the path guidance to location A is interrupted, according to the queue technique, the guidance robot 100 may cancel the current task and immediately perform the path guidance to location B, which is the next task.

The task processing technique for a plurality of tasks that can be executed simultaneously may be modified in various ways.

According to an embodiment, in a case where a common task portion is included in the first and second tasks, the processor 180 of the guidance robot 100 may output task processing information, including the common task portion, to the first and second touchscreens. Then, while the guidance robot 100 performs an operation for the common task portion, the processor 180 may provide information about the other task portions to each of the touchscreens.

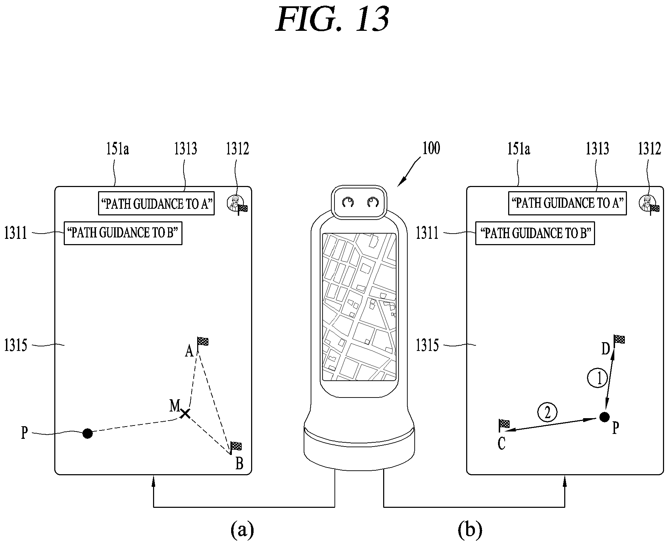

For example, with reference to (a) of FIG. 13, in response to a request for path guidance to A and a request for path guidance to B, which are received from the first and second touchscreens 151a and 151b, a first graphic object 1312, a second graphic object 1313, and a third graphic object 1311 are displayed on the first touchscreen 151a. The first graphic object 1312 indicates a function of a task (e.g., a path guidance request) requested through the second touchscreen 151b. The second graphic object 1313 indicates detailed information (e.g., path guidance to location A) about the task. The third graphic object 1311 indicates the task content (e.g., path guidance to location B) requested through the first touchscreen 151a. Screen information 1315 for initially guiding the users up to a common path (e.g., from current location P to location M) may be output.

Alternatively, for example, with reference to (b) of FIG. 13, the guidance robot 100 may output a guidance screen 1315' that initially provides path guidance from the current position P of the robot to a nearby location D (①), and later to a farther location C (②). At this point, notification information indicating that a return will occur after initially guiding the user along a shorter path to location D may be output to the touchscreen of the user requesting path guidance to location C. Unless the request for path guidance to location C is canceled, this task request will continue to be maintained.

According to an embodiment, in a case where a preset condition is satisfied, the processor 180 of the guidance robot 100 may change the execution priorities of the first and second tasks and temporarily interrupt the execution of the previous task based on the change. Then, the guidance robot 100 may output guidance information associated with the changed execution priorities and the next operation to at least one of the first and second touchscreens, on which the previous task is interrupted.

At this point, the preset condition may be associated with the expected completion time of a task, whether the traveling function is involved in the task, or whether the task is urgent.

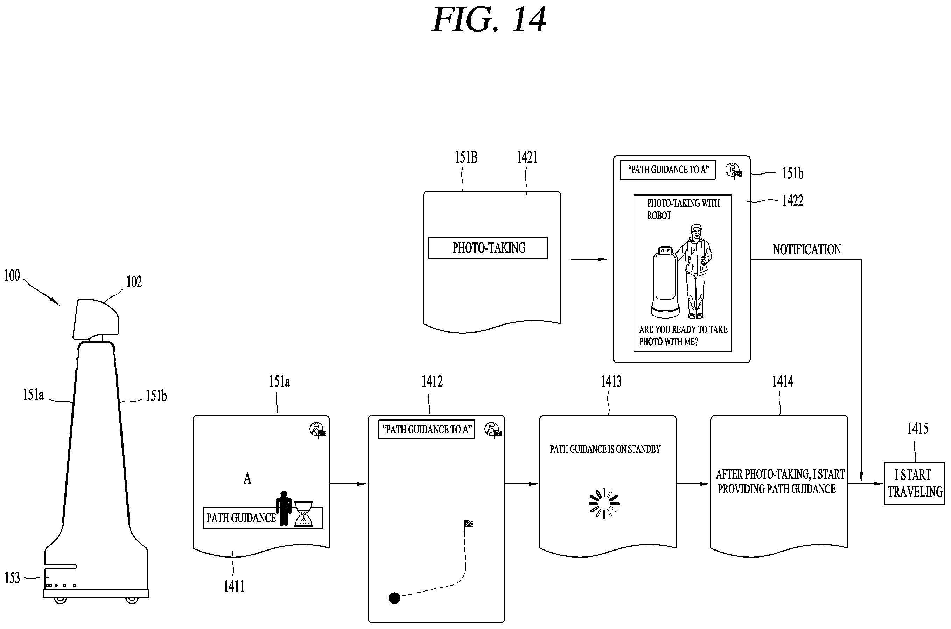

Specifically, with reference to FIG. 14 for example, while a request 1411 for path guidance to location A is received on the first touchscreen 151a and a path guidance screen 1412 corresponding to the request is output to the first touchscreen 151a, a taking-photo request 1421 that is executable at the current location and has a short expected task completion time may be received as a task corresponding to the preset condition on the second touchscreen 151b.

In this case, even when the request 1411 for path guidance to location A is initially received, an execution screen 1422, which corresponds to the taking-photo request 1421 that is executable at the current location and has a short expected task completion time, is output to the second touchscreen 151b.

Screen information 1413 indicating the standby state may be output to the first touchscreen 151a. After the photo is taken, notification information 1414 notifying the commencement of path guidance may be subsequently output. When the photo taking process on the first touchscreen 151a is completed, this completion is notified to the first touchscreen 151a, and traveling to location A for path guidance starts (1415).

As described above, in the guidance robot and the method of operating the guidance robot according to some embodiments of the present disclosure, in a case where the usage request is made for the display on the rear surface while the display on the front surface is in use, the restricted use of the display on the rear surface, such as in the reading mode, is allowed without ignoring the usage request. Consequently, usability can be enhanced by more efficiently utilizing the displays on both surfaces. In addition, in a case where the traveling function is involved in the use of the display on the front surface, the user of the display on the rear surface is notified of this fact, or the traveling function is temporarily restricted. Consequently, both the users of the displays on both surfaces can safely use the guidance robot. Furthermore, each user of the displays on both surfaces can check whether the opposite display is in use and the usage state of the opposite display. Additionally, the user is enabled to use one display without any restriction when the lack of intention to use the opposite display is verified. Consequently, different users of the displays on both surfaces can further maximize the usability of the displays. Even in a situation where a plurality of tasks requested through the displays on both surfaces cannot be executed simultaneously or independently, the plurality of tasks can be processed more efficiently based on references such as the order of task requests, detection of a common task portion, and the estimated task completion time. Consequently, the usage experience and satisfaction of different users can be significantly improved.

Further scope of applicability of the present disclosure will become apparent from the following detailed description. However, since it could be clearly understood by those skilled in the art various changes and modifications are made within the spirit and scope of the present disclosure, the detailed description and specific embodiments such as preferred embodiments of the disclosure should be understood as being given only as examples.

The features, structures, effects, and the like described in the embodiments above are included in at least one embodiment of the disclosure, and are not necessarily limited to only one embodiment. Furthermore, the features, structures, effects, and the like illustrated in each embodiment may be combined or modified in other embodiments by a person skilled in the art to which the embodiments pertain. Therefore, the contents related to these combinations and modifications should be interpreted as falling within the scope of the disclosure.

Although the description above focuses on embodiments, these are merely examples and do not limit the disclosure, and it will be understood by those skilled in the art to which the disclosure pertains that various modifications and applications not exemplified above are possible without departing from the essential characteristics of the embodiments. For example, each component illustrated in the embodiments may be implemented in a modified form. Variations concerning these modifications and applications should be interpreted as being included within the scope of the disclosure defined in the appended claims.

## Claims

1. A guidance robot compromising:
a traveling-enabling unit that moves the guidance robot;
a display unit that includes a first touchscreen and a second touchscreen provided on the front and rear surfaces, respectively, of the main body of the guidance robot; and
a processor that is electrically connected to the display unit and outputs first screen information, corresponding to a first task that involves the use of the first touchscreen, to the first touchscreen,
wherein the processor recognizes a usage request for the second touchscreen while the first screen information is displayed on the first touchscreen, determines second screen information, corresponding to the usage request for the second touchscreen, based on a state of the first task, and outputs the determined second screen information to the second touchscreen.

2. The guidance robot of claim 1, wherein while preset screen information is displayed on the second touchscreen, the usage request for the second touchscreen is recognized based on the detection of a user in front of the second touchscreen through a proximity sensor and on a touch input applied to the second touchscreen.

3. The guidance robot of claim 1, wherein when the first task is in an executed state, in response to the usage request for the second touchscreen, a read-only menu screen is determined to be the second screen information.

4. The guidance robot of claim 1, wherein in response to the determination that a function corresponding to the usage request for the second touchscreen is unable to be performed due to the state of the first task, the processor outputs guidance information, indicating that the requested function is unable to be performed, to the second touchscreen.

5. The guidance robot of claim 1, wherein in a case where a traveling function of the guidance robot is involved in the first task, the processor outputs the second screen information, including guidance information associated with performing the traveling function, to the second touchscreen.

6. The guidance robot of claim 1, wherein while the second screen information is displayed on the second touchscreen, in response to recognizing the lack of intention to use the first touchscreen, the processor switches the first screen information to preset screen information and outputs third screen information corresponding to a second task involving the use of the second touchscreen.

7. The guidance robot of claim 1, wherein while the first screen information corresponding to the first task is displayed, the processor recognizes a request for a second task involving the use of the second touchscreen, determines whether the second task is executed, based on the state of the first task, and change an executed state of the first task based on the second task.

8. The guidance robot of claim 7, wherein in a case where a traveling function of the guidance robot is involved in the first task, the processor executes the first task in a state where the traveling function is interrupted, based on the second task.

9. The guidance robot of claim 7, wherein in a case where the first and second tasks involve functions that are not executable simultaneously, the processor delays the execution of the first and second tasks until execution priorities of the tasks are determined.

10. The guidance robot of claim 9, wherein the processor displays notification information, corresponding to the usage request for the second touchscreen, in one region of the first touchscreen, and
wherein the notification information varies depending on a usage state of the second touchscreen.

11. The guidance robot of claim 9, wherein the processor determines the execution priorities of the first and second tasks based on the task request times for the first and second tasks, outputs task processing information, including the execution priorities according to the determination, to the first and second touchscreens, respectively, and controls an operation of the guidance robot based on the task processing information.

12. The guidance robot of claim 11, wherein while the first and second tasks are executed or while the guidance robot performs the operation based on the task processing information, in response to detecting the lack of intention to use one of the first and second touchscreens, the processor resumes executing the task on the other touchscreen.

13. The guidance robot of claim 9, wherein in a case where a common task portion is included in the first and second tasks, the processor outputs task processing information, including the common task portion, to the first and second touchscreens, and,
wherein while the guidance robot performs an operation for the common task portion, the processor provides information about the other task portions to each of the touchscreen.

14. The guidance robot of claim 11, wherein when a preset condition is satisfied, the processor changes the execution priorities of the first and second tasks, temporarily interrupts the execution of the previous task based on the change, and outputs guidance information associated with the changed execution priorities and the next operation to one of the first and second touchscreens, on which the previous task is interrupted.

15. The guidance robot of claim 14, wherein the preset condition is associated with the expected completion time of time, whether the traveling function is involved in the task, or whether the task is urgent.

16. A method of operating a guidance robot, the method comprising:
a step of displaying different screens on first and second touchscreens provided on the front and rear surfaces, respectively, of the main body of the guidance robot;
a step of outputting first screen information, corresponding to a first task involving the use of the first touchscreen, to the first touchscreen;
a step of recognizing a usage request for the second touchscreen while the first screen information is displayed on the first touchscreen; and
a step of determining second screen information, corresponding to the usage request for the second touchscreen based on a state of the first task, and outputting the determined second screen information to the second touchscreen.
